# EUROPEAN PATENT APPLICATION

(11) **EP 3 623 345 A1**
(43) Date of publication of application: **18.03.2020**
(21) Application number: 18194303.6
(22) Date of filing: 13.09.2018
(51) Int. Cl.: C02F 1/00, B01D 29/085

(54) **APPARATUS FOR THE FILTRATION OF LIQUIDS**

(71) Applicant: Brita GmbH, 65232 Taunusstein (DE)
(72) Inventor: GUCKES, Gunder, 65529 Waldems (DE)

(57) **Abstract**

The invention relates to an Apparatus (40) for the filtration of liquids with an inlet funnel (42) having a seat (48) for a filter cartridge (2) comprising first sealing means, first spring means and first locking means, and with a filter cartridge (2) having second sealing means, second spring means and second locking means, wherein the filter cartridge (2) is insertable into the seat (48) of the inlet funnel (42) in an operating position, wherein the first spring means and the second spring means are arranged to come into contact with each other during the transition of the filter cartridge (2) into the operating position and at least one of the spring means is pretensionable, wherein the first locking means and the second locking means are arranged to cooperate so that they removably fixate the filter cartridge (2) in the operating position and hold the at least one of the spring means in a pretension position, and wherein the first sealing means and the second sealing means are arranged to be pressed against each other under tension in the operating position, thereby securing a flow of the liquid through the filter cartridge (2).

## Description

The present invention relates to an apparatus for the filtration of liquids, a filter cartridge for an apparatus and a method for inserting a filter cartridge into an inlet funnel.

Apparatuses of this kind are being used as water filters for everyday use (also called table water filters) in households. They are primarily used for clearing tap water of unwanted substances. Among these substances are chloride and hardness builders such as calcium and magnesia, but also lead, which finds its way into tap water through the use of lead pipes, especially in older houses.

Table water filters are gravity-operated. Besides the filling of the water, which is to be treated, into the water filter, no work is necessary for filtering the water. The water simply flows downwards through a filter cartridge and into a receptacle for the filtered water due to the gravitational force.

A somewhat similar apparatus is known from DE 10 2004 026 188 A1. This apparatus comprises an inlet funnel having a bottom wall, wherein the bottom wall is provided with an opening for a filter cartridge. The filter cartridge is plugged into the opening, creating a seal between the opening and a sealing rim of the filter cartridge. In use, water is introduced into the inlet funnel from above, which then flows into the filter cartridge, where it is treated. The water then exits the filter cartridge downwards. A bypass of water around the filter cartridge is prohibited by the seal created between the opening and the sealing rim.

Treatment media for the water is located inside of the filter cartridge. The media may be ion exchange resin or active coal. During use, the media is depleted continuously and needs to be replaced. This is usually done by the consumer by replacing the filter cartridge completely, that is, removing the depleted filter cartridge from the apparatus and putting in a new filter cartridge.

The handling of the cartridge during the replacing action is a key both for the acceptance and happiness of the consumer as well as the sealing effect. These two requirements are sometimes counteractive, which is why a lot of effort is put into fulfilling both as good as possible by manufacturers.

One possible solution is presented in DE 10 2004 026 188 A1 and may be called a snapping rim, which snaps during the insertion of the filter cartridge into the inlet funnel. For the snapping action it is necessary to overcome a dead center, which requires a somewhat larger force. An alternative solution described in the same document comprises a filter cartridge with a conventionally tapered sealing rim, which is pressed against an also tapered seat of the inlet funnel. This arrangement requires small tolerances during production, making the manufacturing somewhat high in price. If the filter cartridge is pressed deep into the seat for achieving a good seal a large force is again necessary for removing the filter cartridge.

Another apparatus for filtering water having an inlet funnel and a filter cartridge is known from DE 199 15 829 A1. The disclosed filter cartridge is circular in diameter and is firstly inserted vertically into the inlet funnel. The cartridge is then turned around its main axis, which leads to cams of the inlet funnel entering inclined grooves of the filter cartridge. Sealing elements of the filter cartridge and the inlet funnel are pressed together due to the inclination of the grooves. At the end of the turning motion, the cams engage windows thereby signaling an end position.

The combination of a vertical and a turning motion reduces the usability of the apparatus in comparison to a strictly vertical motion. Additionally, the inlet funnel must be held against the turning motion, which is also disadvantageous.

A filter cartridge having a central piston is disclosed in EP 2 565 163 A1. The piston is pressed into the filter cartridge after inserting the filter cartridge into an inlet funnel. The motion moves locking hooks radially outwards thereby locking the filter cartridge in the inlet funnel. For removing the cartridge, it is necessary to first pull the piston a short distance thereby unlocking the locking hooks.

The problem of the present invention is to improve the handling of filter cartridges during insertion into and removal from an inlet funnel.

This problem is solved by an apparatus for the filtration of liquids according to claim 1.

The apparatus according to the invention comprises an inlet funnel having a seat for a filter cartridge, the seat comprising first sealing means, first spring means and first locking means as well as a filter cartridge having second sealing means, second spring means and second locking means. The filter cartridge is insertable into the seat of the inlet funnel in an operating position. Preferably, the filter cartridge is additionally placeable in the seat of the inlet funnel in a standby position.

The first and the second spring means are arranged to come into contact with each other during the transition of the filter cartridge into the operating position, preferably staying in contact with each other during at least a final stage of the transition, and at least one of the spring means is pretensionable. At least one of the spring means stores spring energy in the operating position. The spring energy stored can later be used to support the consumer during the removing of the filter cartridge. The spring means preferably act in the vertical or gravitational direction, that is, at least one of the spring means is pretensionable by a movement of the other spring means in the vertical or gravitational direction. The transition of the filter cartridge into the operating position preferably takes place by moving the filter cartridge from the standby position into the operating position.

Unless otherwise specified, terms like "down", "downwards", "upwards", "vertical", "higher", "lower", "above", "below" or "axially" refer to the gravitational direction.

The first locking means and the second locking means are arranged to cooperate so that they removably fixate the filter cartridge in the operating position and hold the at least one of the spring means in a pretension position. The at least one of the spring means stores energy as described above in the pretension position and releases said energy when it is no longer held in the pretension position by the locking means.

The first sealing means and the second sealing means are arranged to be pressed against each other under tension in the operating position, thereby securing a flow of the liquid through the filter cartridge. In other words, the sealing means ensure that no part of the liquid flows around the filter cartridge in the form of a bypass.

During the insertion of the filter cartridge according to the invention, that is, moving the filter cartridge from an area outside the inlet funnel into the operating position, at least one of the spring means is pretensioned. Once the filter cartridge has reached the operating position it is held in place by the locking means. The sealing means also act as explained above in the operating position. For removing the filter cartridge, that is, moving the filter cartridge from the operating position into an area outside the inlet funnel, the cooperation between the locking means is terminated. Due to the lack of fixation by the locking means, the spring means then push the filter cartridge out of the operating position by means of the stored spring energy, making the filter cartridge easy to remove by hand.

The apparatus according to the invention is preferably a gravity-operated system. Gravity-operated systems have no pump for conveying the liquid to be treated. Preferably, the liquid to be treated is inserted into a container, from which it flows downwards into another container only due to the gravitational force, being treated on the way in a filter cartridge. Accordingly, the filter cartridge and the inlet funnel of the apparatus according to the invention form a common flow path running from an upper area inside the inlet funnel above the seat through inlets into the filter cartridge and from there on through outlets of the filter cartridge directly into an area below the inlet funnel or into a lower part of the inlet funnel separated from the upper area by the sealing means and on into the area below the inlet funnel.

The apparatus may additionally comprise a hollow body, into which the inlet funnel may be put, serving as a container for the treated liquid, and a lid for closing the inlet funnel at the top after liquid that is to be treated has been poured into the same. The hollow body may comprise a handle.

Both the inlet funnel or parts thereof and the filter cartridge or parts thereof are preferably formed of plastic and further preferably manufactured by injection molding. Alternatively, they may also be manufactured by (injection) blow molding, deep drawing or similar processes. The same applies to the hollow body and the lid. Injection molding is very cost effective for large quantities being produced.

The inlet funnel is preferably provided with an inlet opening. The inlet opening is used for inserting the liquid to be treated into the inlet funnel, which is then treated automatically without further action by the consumer. The seat of the inlet funnel is preferably located beneath the inlet opening along the gravitational direction and is accessible from the inlet opening. Due to this, the filter cartridge may be inserted and removed via the inlet opening. The inlet opening is preferably provided with a profile large enough to allow for the filter cartridge to pass through. The insertion and removal of the filter cartridge is preferably achieved by movements in and against the gravitational direction.

The first sealing means, the first locking means and the first spring means are preferably separate elements. In other words, these means are spaced apart, even though they may be integrally formed with the inlet funnel. In particular, the first sealing means, the first locking means and the first spring means are located at different heights along the gravitational direction in use. Particularly, these means are functionally separate from each other. The separation allows for each of the means to be configured particularly for its own function without the need for compromise. The above also applies preferably to the group of the second sealing means, the second locking means and the second spring means assigned to the filter cartridge.

The first locking means is preferably accessible from the inlet opening, in particular even when a filter cartridge is inserted in the seat, making the first locking means operable without having to remove, rotate or otherwise manipulate the inlet funnel. The accessibility is improved when the first locking means is located higher than the first sealing means and/or the first spring means. The first sealing means is preferably located higher than the first spring means, shielding the spring means from untreated liquid.

In advantageous embodiments, the first sealing means and the second sealing means in the operating position are pressed against each other under tension in the gravitational direction. This arrangement improves the sealing properties. Sealing means often have spring characteristics, which must not be confused with those of the spring means. The apparatus according to the invention has spring means separate from the sealing means providing spring characteristics in addition to a potential spring effect of the sealing means.

The fixation of the filter cartridge in the operating position is preferably a fixation in all three dimensions. This prevents both a shifting of the filter cartridge in the seat and the filter cartridge falling out of the seat.

The locking means preferably cooperate by being connectable. In particular, in their so called fixation position one of the locking means may reach around the other, thereby forming a form-fit connection and holding the filter cartridge in the operating position. The cooperation of the locking means may be terminated by cutting their connection. The connection is preferably cut by moving or bending at least one of the locking means out of the fixation position into a so called release position.

The first locking means and the second locking means preferably comprise at least one locking hook and at least one locking rim, wherein the locking hook is slideable along the locking rim during the transition of the filter cartridge into the operating position and interlockable with the locking rim in a form-fit manner. The locking hooks provide two functions: they fixate the filter cartridge in the inlet funnel and they also provide a feedback to the consumer regarding the correct placement of the filter cartridge in the form of a click sound when they snap into the fixation position.

The manufacturing of the filter cartridge is supposed to be relatively cheap, the filter cartridge being a replacement part. Since the locking rim is cheaper to manufacture than the locking hook, the at least one locking rim is preferably part of the filter cartridge. The at least one locking hook is therefore preferably part of the inlet funnel. On the other hand, the at least one locking hook may also be part of the cartridge. In this case, the first locking means of the inlet funnel comprise a locking rim for cooperation with the locking hook of the cartridge. If the locking hook is part of the cartridge, a new locking hook is provided every time the cartridge is replaced. The locking hook may then be formed with less material in comparison with a locking hook provided on the inlet funnel.

The inlet funnel may additionally comprise at least one holding rim located on an opposite side of the seat with regards to the locking hook. When inserting the filter cartridge into the seat in the operating position the filter cartridge is firstly moved under the holding rim with its locking rim, the filter cartridge being tilted during said movement. The opposite side of the locking rim is then moved downwards onto the locking hook into a standby position. Additional movement downwards leads to the locking hook sliding along the locking rim as described above and finally ending up in the fixation position.

The locking hook is preferably movable between a release position and the fixation position. In the release position the filter cartridge may be inserted into and removed from the seat without resistance. In the fixation position the locking means in the form of the locking hook and the locking rim prevent the removal of the filter cartridge.

In advantageous embodiments the locking hook comprises a reset spring acting in the direction of the fixation position. This way no additional action is necessary when inserting the filter cartridge into the seat. The filter cartridge is simply moved into the operating position by the consumer, thereby moving the locking hook out of the way against the force of the reset spring. Once the filter cartridge has reached the operating position the reset spring forces the locking hook back into the fixation position resulting in a cooperation of the locking means.

Alternatively or in addition the locking hook is formed integrally with the inlet funnel and elastically deformable from the fixation position to the release position.

In the fixation position the locking hook and/or the reset spring are preferably not or less deformed than in the release position. That way the locking hook and/or the reset spring are deformed during the replacement of the filter cartridge. This replacement usually takes only seconds. Most of the time during every day use, however, the locking hook and/or the reset spring are either not deformed or only deformed a little bit, which leads to a long lifetime.

The first locking means preferably comprises several locking hooks located along a circumferential rim of the seat at equal distances. This is also possible in connection with the above-mentioned holding rim. In particular advantageous embodiments the locking hooks are arranged symmetrically around a rim of the seat. The use of a plurality of locking hooks makes it possible to insert the cartridge into the seat by a movement in gravitational direction alone. During this movement all locking hooks are moved out of the way in the above-described fashion making way for the filter cartridge to be inserted into the operating position in the seat. Once the filter cartridge has reached the operating position, all locking hooks move back (either due to deformation or due to respective reset springs) thereby fixating the filter cartridge in the operating position.

The first sealing means and the second sealing means comprise at least two sealing elements, one of the sealing elements (referred to as the elastic sealing element) being more elastic than the other (referred to as the inelastic sealing element, ever though all materials are at least somewhat elastic), in particular, at least five times as elastic with regards to their respective Young's modulus. Such a pairing of an elastic sealing element and an inelastic sealing element provides for a good sealing. The sealing elements are preferably ring-shaped so that they may be placed around the rim of the seat and a cartridge body, respectively.

The elastic sealing element is preferably part of the inlet funnel and the inelastic sealing element part of the filter cartridge. However, it is likewise possible to provide the elastic sealing element on the filter cartridge and the inelastic sealing element on the inlet funnel. With the latter arrangement the elastic sealing element is renewed every time a new filter cartridge is introduced into the inlet funnel. On the other hand, forming the filter cartridge with the inelastic sealing element reduces the manufacturing cost of the filter cartridge since it may then be completely formed of one (rigid) material only.

If the elastic sealing element is an O-ring (basically a ring of circular profile) the inelastic sealing element is preferably a body part of the cartridge or of the inlet funnel having a flat sealing surface, which is pressed against the O-ring in the operating position creating a linear sealing. The sealing surface may be formed relatively wide in relation to the O-ring since it does not matter at which position of the sealing surface the O-ring contacts the same. Hence, the required production accuracy for such an arrangement is relatively low reducing the production cost.

If the elastic sealing element is formed in the shape of a ring disc (basically a ring of rectangular profile) the inelastic sealing element is preferably a sealing edge, which is pressed into the ring disc in the operating position also creating a linear sealing. The sealing edge may be formed with a rounding so that the ring disc is not damaged during use. The sealing surface of the ring disc may again be formed relatively wide in relation to the sealing edge since it does not matter at which position of the sealing edge contacts the same. Hence, the required production accuracy for such an arrangement is also relatively low reducing the production cost.

The first spring means and the second spring means comprise at least one spring element and at least one support element. The spring element stores the spring energy in the operating position and support the removal of the filter cartridge. The support element is formed so that the spring element may rest upon it in the operating position thereby storing spring energy.

The holding of the at least one spring means in the pretension position may be achieved either directly or indirectly. Preferably, the locking means fixate the filter cartridge and the filter cartridge holding the at least one spring means in the pretension position.

The spring element is preferably a coil spring, a leaf spring, a flat spring or a torsion spring. Of course, other spring types may be employed as well. A leaf spring may be formed easily by injection molding, making said spring preferable.

As pointed out above the production cost of the cartridge is supposed to be as low as possible. The spring element is therefore preferably formed integrally with the inlet funnel. Accordingly, the support element is preferably a wall or a wall portion of the filter cartridge.

As the spring element is under pressure most of the time during use, it may also be advantageous to form the spring element as part of the filter cartridge as an alternative, in particular integrally with the filter cartridge or a part thereof, in particular with a bottom wall of the filter cartridge. In this case the support element may be part of the inlet funnel, in particular in the form of a bottom wall of the inlet funnel.

The bottom walls of the inlet funnel and the filter cartridge are neighboring each other in the gravitational direction making the bottom walls a perfect placement for the spring means.

The problem of the invention is also solved by a filter cartridge for an apparatus according to the above, the filter cartridge having second sealing means, second spring means and second locking means. The second locking means, the second sealing means and the second spring means are each located at a distance to the respective others.

The second sealing means, the second locking means and the second spring means are preferably separate elements. In other words, these means are spaced apart, even though they may be integrally formed with the filter cartridge. In particular, the second sealing means, the second locking means and the second spring means are located at different heights along the gravitational direction in use. Particularly, these means are functionally separate from each other. The separation allows for each of the means to be configured particularly for its own function without the need for compromise.

The second sealing means is preferably a sealing means acting predominantly in the gravitational direction, in particular only in the gravitational direction.

All advantageous features of the filter cartridge mentioned above with reference to embodiments of the apparatus according to the invention, may also be applied to the filter cartridge according to the invention.

The problem of the invention is also solved by a method for inserting a filter cartridge having second sealing means, second spring means and second locking means into an operating position in an inlet funnel having a seat for the filter cartridge comprising first sealing means, first spring means and first locking means. The method is characterized in that:
- the filter cartridge is placed in the seat of the inlet funnel in a standby position,
- during transition of the filter cartridge from the standby position into the operating position the first spring means and the second spring means come into contact with each other, preferably staying in contact with each other during at least a final stage of the transition, and at least one of the first and the second spring means is pretensioned,
- (also during transition of the filter cartridge from the standby position into the operating position) the first locking means and the second locking means cooperate so that they removably fixate the filter cartridge in the operating position and hold the at least one of the spring means in a pretension position, and
- (also during transition of the filter cartridge from the standby position into the operating position) the first sealing means and the second sealing means are pressed against each other under tension in the operating position, thereby securing a flow of the liquid through the filter cartridge.

The method according to the invention improves the handling of the filter cartridge during insertion and removal by providing spring means, which are held in a pretension position by locking means and which assist the consumer during removal of the filter cartridge with the spring energy stored during insertion of the filter cartridge. The locking means can additionally provide a feedback to the consumer as to whether or not the filter cartridge has reached its operating position.

All features mentioned above with reference to the advantageous embodiments of the apparatus according to the invention or the filter cartridge according to the invention may also be applied to the method according to the invention.

The present invention will be described in detail with reference to the examples shown in the drawing, in which the following is shown:
- Figure 1:: schematically a filter cartridge according to the invention in a sectional side view;
- Figures 2a to 2d:: schematically, sequentially a filter cartridge being inserted into and removed from an inlet funnel in a first embodiment of an apparatus according to the invention in side views;
- Figures 3a to 3d:: schematically, sequentially a filter cartridge being inserted into and removed from an inlet funnel in a second embodiment of an apparatus according to the invention in side views;
- Figures 4a and 4b:: schematically a third embodiment of an apparatus according to the invention in side views;
- Figures 5a to 5d:: schematically, sequentially a filter cartridge being inserted into and removed from an inlet funnel in a fourth embodiment of an apparatus according to the invention in side views.

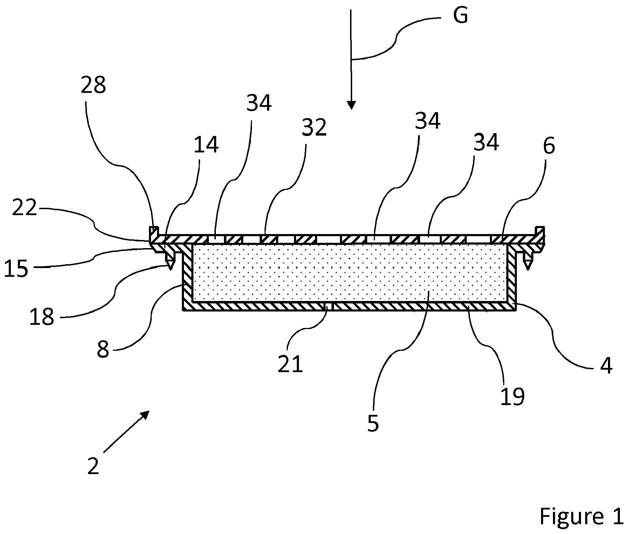

The filter cartridge 2 shown in Figure 1 comprises a hollow body portion 4 and a head portion 6. The body portion 4 in the side view has a rectangular profile with a bottom wall 19 and a circumferential side wall 8. In other embodiments, the body portion 4 may have other profiles in the side view, e.g. a trapezoid, polygonal or semicircular profile. Also, at least some of the corners of each of the mentioned profiles may be rounded. The side wall 8, in particular as seen from above, may have one of many possible shapes. It is generally possible for the side wall 8 to be round, rectangular, polygonal, oval, or any other shape forming a closed path. Rectangular and polygonal shapes may be provided with rounded corners. The head portion 6 may be of similar shapes.

A circumferential horizontal rim 14 is provided protruding perpendicular to the gravitational direction G outwards from the side wall 8 of the body portion 4 at an upper portion thereof. The horizontal rim 14 is provided with a circumferential sealing edge 18 protruding (axially) downward therefrom. The horizontal rim 14 has a tapered outer edge 15. The horizontal rim 14 and the sealing edge 18 are of a shape similar to the one of the side wall 8. In general, the horizontal rim 14 and the sealing edge 18 may accordingly also be of the shapes mentioned above with regard to the side wall 8.

In use, the filter cartridge 2 will be arranged in the position shown in relation to the gravitational direction G.

The body portion 4 contains liquid treatment media 5 such as ion exchange resin and/or active coal. From above the body portion 4 is open, being closed partially by the head portion 6 when forming the filter cartridge 2. A bottom wall 19 of the filter cartridge 2 is provided with an outlet 21 extending in a vertical direction, that is, parallel to the gravitational direction G.

The head portion 6 is of a generally flat shape comprising a circumferential side 22. A circumferential rim 28 is provided around the side 22 of the head portion. The rim 28 extends upwards from an upper side 32 of the head portion 6. The rim 28 is in alignment with the tapered edge 15 of the horizontal rim 14.

The head portion 6 is provided with several inlets 34 extending in the vertical direction. Water to be treated may enter the filter cartridge 2 through the inlets 34. Inside the filter cartridge 2 the water comes into contact with the liquid treatment media 5 leading to a treatment of said water. The treated water then exits through the outlet 21 downwards.

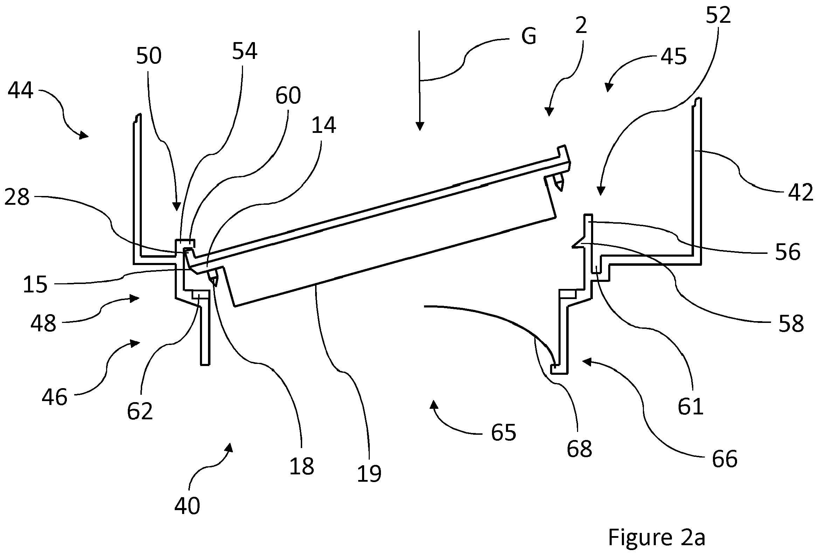

Figures 2a to 2d show an apparatus 40 according to the invention. The apparatus 40 comprises an inlet funnel 42 and a cartridge 2 similar to the one shown in Figure 1. The inlet funnel 42 comprises a generally cylindrical container portion 44 and a seat 48 for the filter cartridge 2 generally below the container portion 44. In the sectional view of the figures two opposite sides 50, 52 of the seat 48 can be seen. In a view from above the seat 48 may have the same basic form of the side wall of the filter cartridge 2 (round, rectangular, polygonal, oval, or any other shape).

The container portion 44 is open from above providing an inlet opening 45 for pouring liquid to be treated into the inlet funnel 42 at the top. The inlet opening 45 is larger than the seat 48 and in particular large enough for a filter cartridge 2 to pass through.

On one side 50 the seat 48 is provided with a holding rim 54. On the other side 52 of the seat 48 there is a locking hook 56. The locking hook 56 is an object extending upwards from a wall of the seat 48 having a tapered protrusion 58 extending horizontally facing the holding rim 54. The holding rim 54 also has a protrusion 60, which extends horizontally facing the locking hook 56 and is not tapered in this embodiment but may well be in other embodiments. The inlet funnel 42 comprises a groove 61 next to the locking hook 56 and outside of the seat 48. The groove 61 provides for a longer locking hook 56 making it easier to bend.

The rim 28 together with the tapered edge 15 of the horizontal rim 14of the filter cartridge 2 form a locking rim for cooperation with the locking hook 56.

The seat 48 is further provided with a sealing ring 62. The sealing ring 62 is a ring with a rectangular profile. In other embodiments, the sealing ring 62 may have other profiles, e.g. a trapezoid, polygonal, semicircular or circular profile.

A lower portion 46 of the seat 48 is located below the sealing ring 62. In general, the lower portion 46 is also of a hollow shape being open at the top so that the filter cartridge 2 may be partially entered into the lower portion 46 and open at the bottom providing an outlet opening 65 for treated water. On a bottom end 66 of the lower portion 46, the seat 48 is provided with a leaf spring 68. The leaf spring 68 extends upwards and into a center of the lower portion 46. In figure 2a the leaf spring 68 is in a relaxed state.

Figures 2a to 2d illustrate the placement and removal of the filter cartridge 2. In figure 2a, the filter cartridge 2 is located mostly in the container portion 44 of the inlet funnel 42 having been inserted through the inlet opening 45 by a consumer (not shown). The rim 28 has been placed under the holding rim 54 by tilting the filter cartridge 2 and partially moving the filter cartridge 2 sideward.

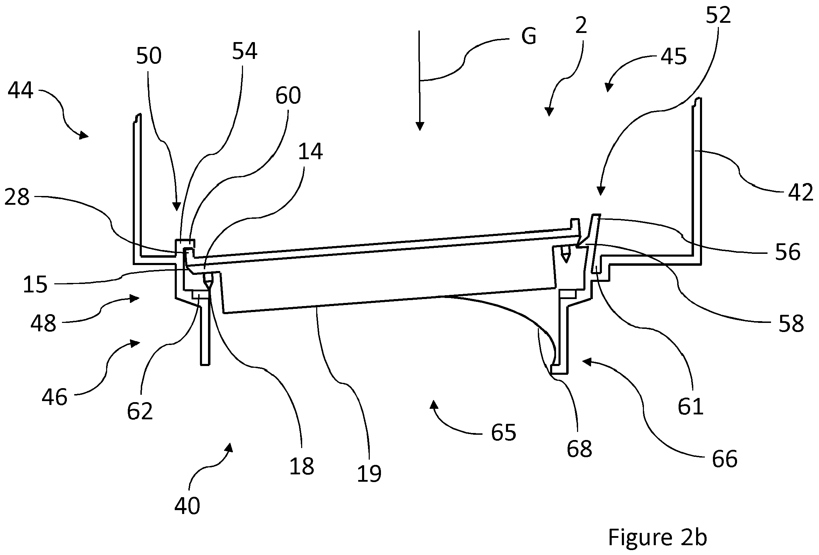

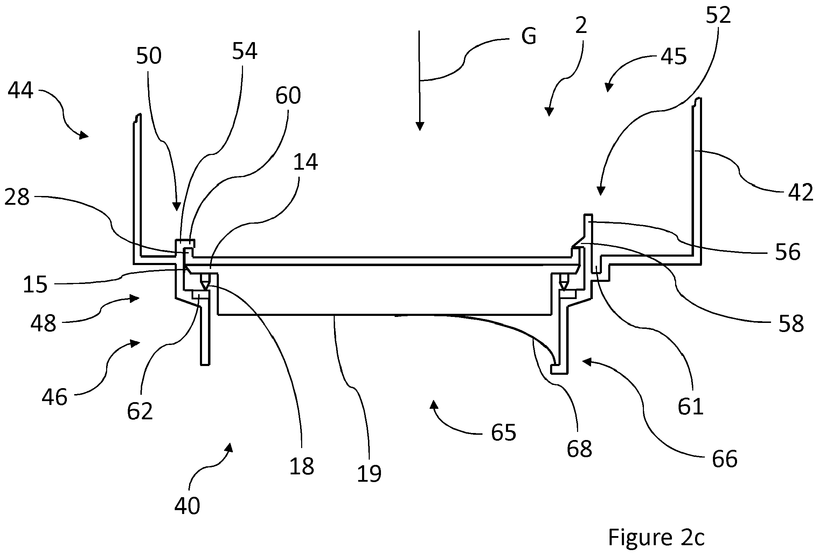

After the filter cartridge 2 is placed under the holding rim 54 it is moved further down as shown in figure 2b. As a result of this movement the tapered outer edge 15 of the horizontal rim 14 comes into contact with the tapered protrusion 58 of the locking hook 56 (standby position) and upon further movements presses the locking hook 56 from its so-called fixation position into a release position. According to this embodiment apparently the tapered outer edge 15 is beneficial only on the side 52 of the seat 48 providing the locking hook 56 while there is no need for it on the opposite side 50 or even around the entire horizontal rim 14. In the release position the filter cartridge 2 can pass by the locking hook 56 so that it finally comes to rest in an operating position as shown in figure 2c. When the filter cartridge 2 enters the operating position the locking hook 56 snaps back into the fixation position emitting a click sound as a feedback to the consumer indicating that the filter cartridge 2 has reached the operating position.

The sealing edge 18 of the filter cartridge 2 is less elastic than the sealing ring 62. During said final movement the sealing edge 18 is pressed into the sealing ring 62 under tension thereby securing a flow of untreated liquid into the filter cartridge 2.

During transition of the filter cartridge 2 from the standby position into the operating position the leaf spring 68 comes into contact with the bottom wall 19 of the filter cartridge 2 and while staying in contact upon further movement is tensioned. In figure 2c the leaf spring 68 is in a pretension positon being held in said position by the locking hook 56 and the holding rim 54 cooperating (interacting) with the rim 28 of the filter cartridge 2.

The filter cartridge 2 is of symmetrical configuration so that it can be placed into the seat in two opposite ways. Any one of several portions of the rim 28 may be placed under the holding rim 54 with the opposite side of the rim 28 being placed under the locking hook 56. This makes it easy for the consumer to place the filter cartridge 2 into the seat 48 and therefore improves the handling of the filter cartridge 2.

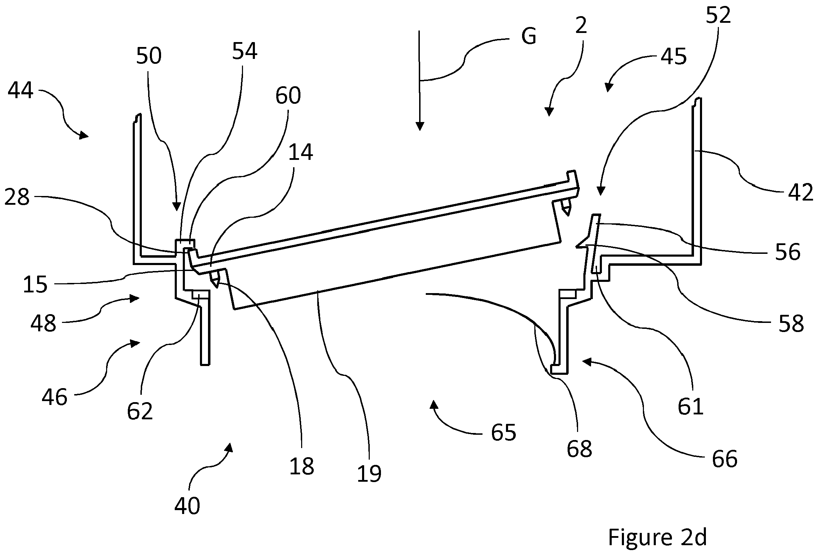

The locking hook 56 is accessible from the inlet opening 45. For removing the filter cartridge 2 from the inlet funnel 42 the consumer may reach through the inlet opening in order to bend the locking hook 56 sideways into its release position as shown in figure 2d. The locking hook 56 and the rim 28 are thereby disconnected, terminating the cooperation between the two elements. Without said cooperation the filter cartridge 2 is pressed upwards by the leaf spring 68. The filter cartridge 2 may then be easily taken out of the inlet funnel 42 through the inlet opening 45 by the consumer.

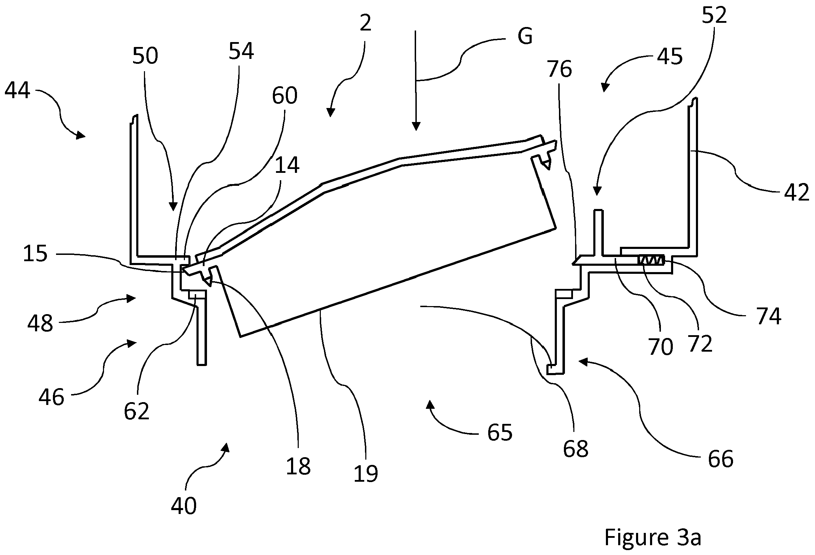

A different embodiment of the apparatus 40 according to the invention is shown in figures 3a to 3d. The inlet funnel 42 is again provided with a container portion 44 and a seat 48 for a filter cartridge 2 with a lower portion 46. The filter cartridge 2 differs in shape in comparison with the previous embodiment but comprises a similar bottom wall 19 as well as a similar sealing edge 18 and horizontal rim 14 with a tapered outer edge 15. It should be noted that, in accordance with the present invention, the filter cartridge 2 according to the second embodiment of the apparatus (Figures 3a to 3d) may be used with the inlet funnel 42 of the first embodiment of the apparatus (Figures 2a to 2d) and vice versa.

The seat 48 again comprises the same sealing ring 62 and the same holding rim 54 as the previously described embodiment. Differently, the locking hook 70 is a part separate from the inlet funnel 42 and movable sideways along a channel 72 of the inlet funnel 42. A reset spring 74 is located inside the channel 72. In figure 3a the reset spring 74 is shown in an expanded state with the locking hook 70 being in its fixation position. On the opposite side of the reset spring 74 the locking hook 70 is again provided with a tapered protrusion 76.

For placing the filter cartridge 2 in the seat 48 into the standby position the consumer again moves the filter cartridge 2 through the inlet opening 45 into the container portion 44 of the inlet funnel 42 and then tilts the filter cartridge 2 in order to move the horizontal rim 14 of the filter cartridge 2 under the holding rim 54 as shown in figure 3a. The horizontal rims 14 with the tapered outer edge 15 acts as a locking rim in this embodiment.

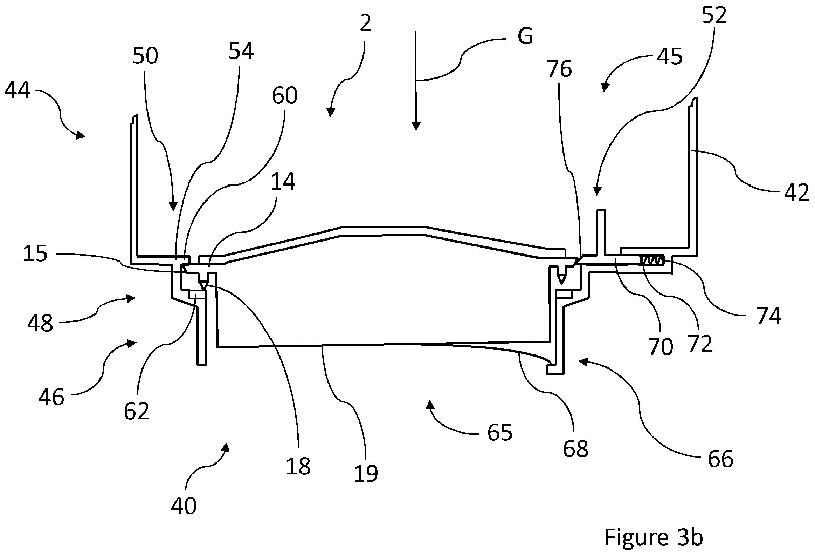

The filter cartridge 2 is again pressed further downwards so that the tapered outer edge 15 of the horizontal rim 14 contacts the tapered protrusion 76 of the locking hook 70 (standby position). Upon further movement of the filter cartridge 2 in a downwards direction the locking hook 70 is moved sideways thereby tensioning the reset spring 74 as shown in figure 3b.

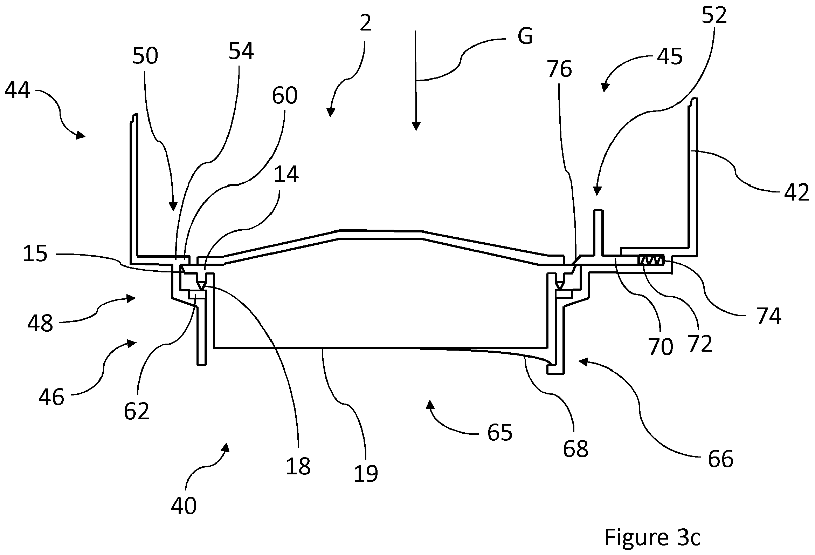

Once the locking hook 70 has moved out of the way far enough the filter cartridge 2 may enter into the operating position in the seat 48 as shown in figure 3c. The locking hook 70 then snaps back into the fixation position due to the reset spring 74. In the operating position the sealing edge 18 of the filter cartridge 2 are pressed under tension into the sealing ring 62 thereby securing a flow of the liquid that is to be treated into the filter cartridge 2. The leaf spring 68 has been put into a pretension position by the movement of the filter cartridge 2 and is held in said position due to the cooperation of the locking hook 70 and the holding rim 58 with the horizontal rim 14.

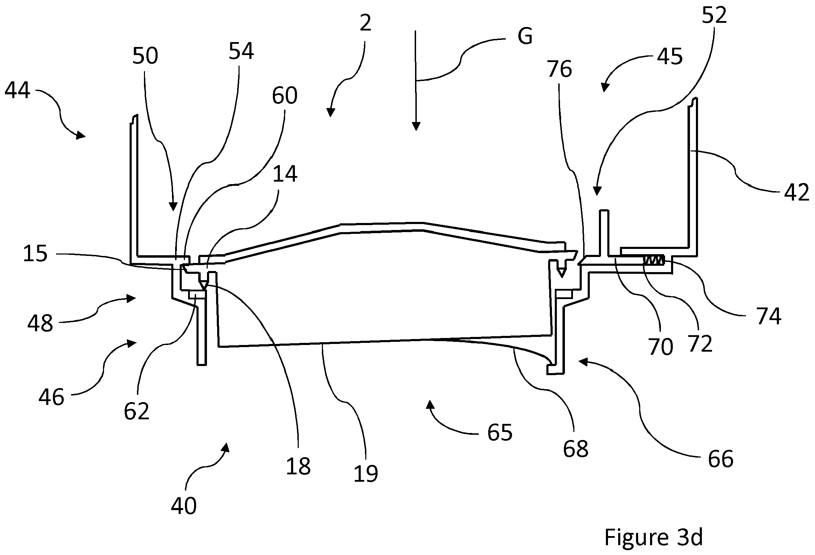

For removing the filter cartridge 2 from the inlet funnel 42 the consumer may reach into the inlet funnel 42 via the inlet opening 45 in order to move the locking hook 70 sideways against the pressure of the reset spring 74 until the locking hook 70 reaches its release position as shown in figure 3d. The leaf spring 68 then pushes the filter cartridge 2 out of the seat 48 upwards. The filter cartridge 2 may then be removed easily by the consumer.

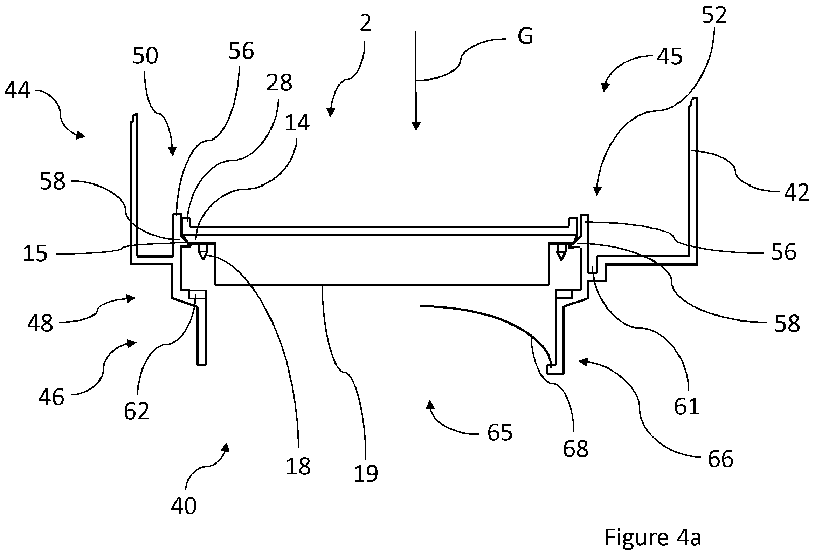

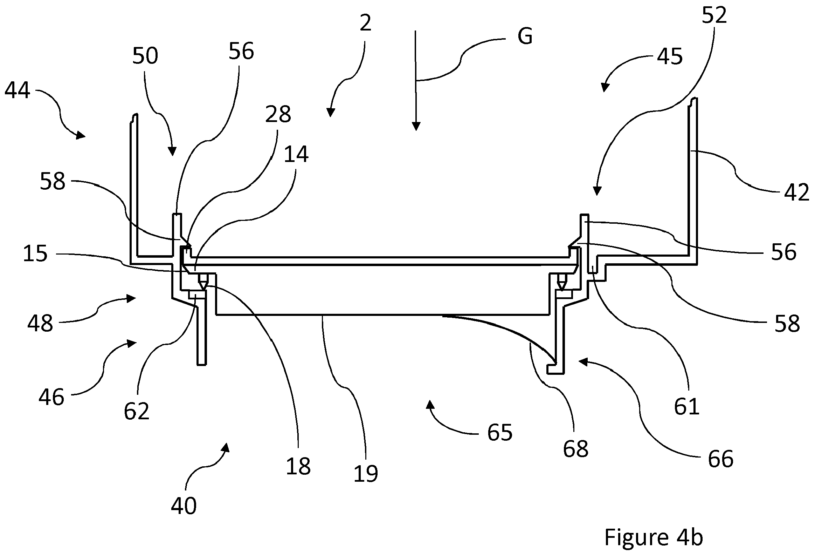

The third embodiment of the apparatus 40 according to the invention shown in figure 4a and 4b is similar to the first embodiment as shown in figures 2a to 2d. The major difference lies in the locking means provided in the inlet funnel 42. In the third embodiment, the seat 48 is provided with two locking hooks 56 located on opposite sides 50, 52 thereof. As a consequence no holding rim is present in the third embodiment. It should be noted that the locking hook 70 according to the second embodiment could be used as an alternative to each of the locking hooks 56 in the third embodiment.

For placing the filter cartridge 2 into the seat the filter cartridge 2 is moved through the inlet opening 45 into the container portion 44 of the inlet funnel 42. In contrast to the previous embodiments there is no need to tilt the filter cartridge 2. The consumer only needs to move the filter cartridge 2 in the gravitational direction G continuously. Opposite sides of the tapered outer edge 15 of the horizontal rim 14 come into contact with the locking hooks 56 of the inlet funnel 42, thereby reaching the standby position. When moved further downwards, the filter cartridge 2 bends both locking hooks 56 out of the way. When both locking hooks 56 have been bent into their respective release position the filter cartridge 2 is moved further down into the operating position. In said position the sealing edge 18 is again pressed into the sealing ring 62 of the inlet funnel 42 making sure that the liquid to be treated only flows into the filter cartridge 2. The insertion of the filter cartridge 2 into the seat 48 is simplified in this embodiment compared to the previously described embodiments.

Another advantage of this embodiments in comparison with the previous two relates to the removal of the filter cartridge 2. For removing the filter cartridge 2 from the inlet funnel 42 only one of the two locking hooks 56 must be bent from its fixation position into its release position. The consumer is therefore able to choose either of the two locking hooks 56 for removing the filter cartridge 2 making removal possible at both sides 50, 52 of the seat. Of course, the consumer may also choose to bend both locking hooks 56. In either case the leaf spring 68 moves the filter cartridge 2 upwards so that the consumer can simple lift the filter cartridge 2 out of the inlet funnel 42 through the inlet opening 45.

The apparatus 40 of each of the illustrated embodiments may additionally comprise a hollow body (not shown), into which the inlet funnel 42 may be put, serving as a container for the treated liquid and a lid (not shown) for closing the inlet opening 45 after water that is to be treated has been poured into the inlet funnel 42. The hollow body may comprise a handle.

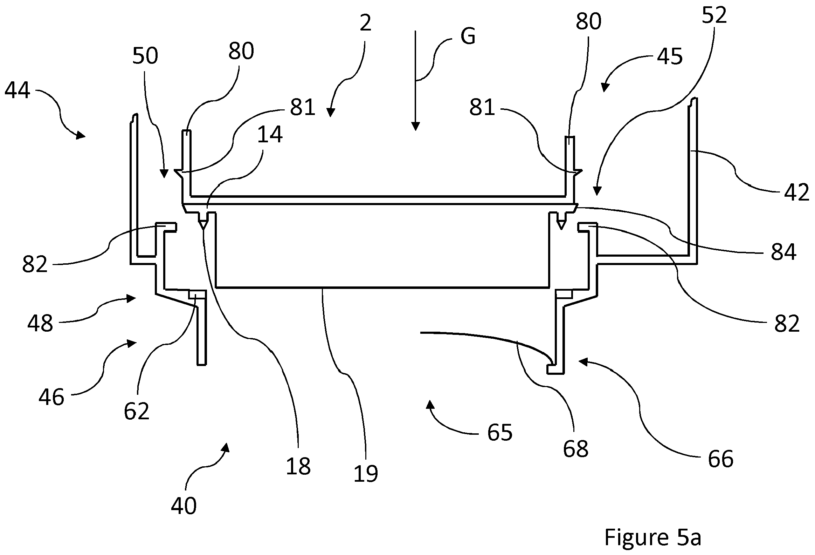

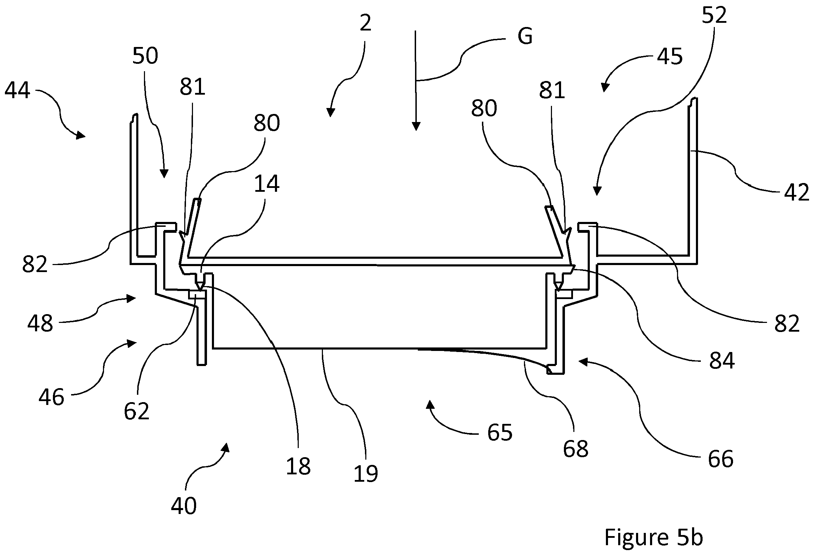

In the fourth embodiment shown in Figures 5a to 5d the filter cartridge 2 is provided with two locking hooks 80 on opposite sides of the head portion 6. Each locking hook 80 is provided with a tapered protrusion 81, the tapered protrusions 81 of both locking hooks 80 extending horizontally away from each other. The seat 48 of the inlet funnel 42 comprises two locking rims 82 acting as the first locking means located at opposite sides 50, 52 thereof. The locking rims 82 may be part of one continuous annular ring or separate elements protruding horizontally and radially inwardly with regard to a central axis thereby facing each other. Thanks to the two locking hooks 80 the filter cartridge 2 may be placed in the seat 48 with a straight downward movement during which the locking hooks 80 are moved sideways into their respective release position as shown in Figure 5b. With the locking hooks 80 in their release positions the filter cartridge 2 may be moved further downwards into its operating position.

Apart from that the filter cartridge 2 is similar to the one of the first embodiment (Figures 2a to 2d). It is provided with a body portion 4 having a sealing edge 18 protruding in a vertical direction. The body portion 4 is also provided with a tapered outer edge 84. The outer edge 84 functions as a centering aid improving the placement process of the filter cartridge 2 during the transition of the position shown in Figure 5a into the one shown in Figure 5b.

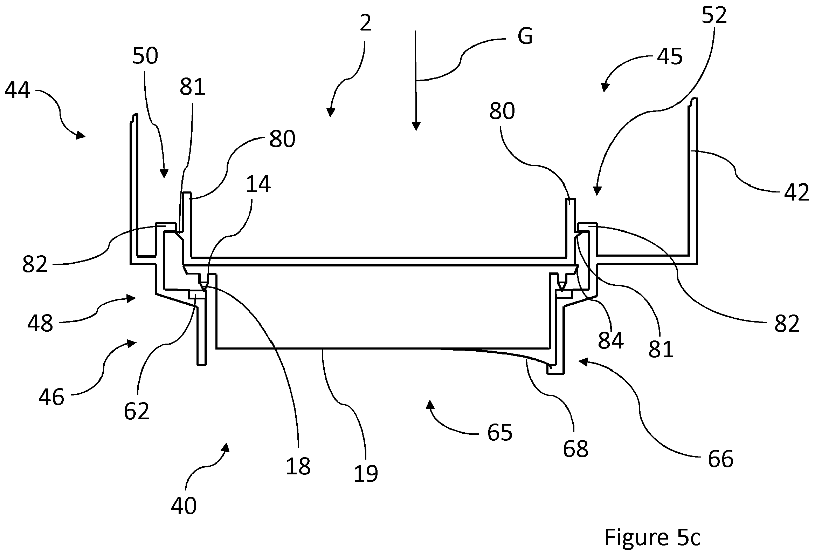

In Figure 5b the filter cartridge 2 has reached its operating position and the locking hooks 80 are moving from the release position back to their respective fixation position as shown in Figure 5c. In the fixation position the locking hooks 80 fixate the filter cartridge 2 in the seat 48. The sealing edge 18 is being pressed into the sealing element 62 of the seat 48 in said operating position and the leaf spring 68 is held in its pretension position.

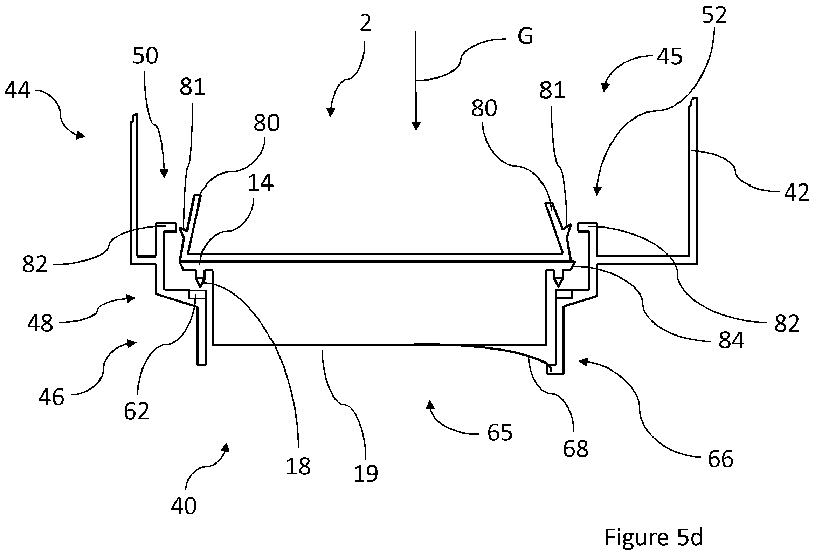

The locking hooks 80 are accessible from the inlet opening 45. For removing the filter cartridge 2 from the seat 48 and the inlet funnel 42 the locking hooks 80 are bent by a consumer as shown in Figure 5d into their respective release position. The locking hooks 80 and the locking rims 82 are thereby disconnected, terminating their cooperation. Without said cooperation the filter cartridge 2 is pressed upwards by the leaf spring 68. The filter cartridge 2 may then be easily taken out of the inlet funnel 42 through the inlet opening 45 by the consumer. It should be noted that it is also possible to bend only one of the locking hooks 80 and then remove the filter cartridge 2 by a tilting motion.

In other embodiments the filter cartridge 2 may be provided with only one locking hook 80 reducing the complexity of the filter cartridge 2, but eliminating the possibility of placing the filter cartridge 2 with a single linear movement.

### List of References

- 2: filter cartridge
- 4: body portion
- 5: liquid treatment media
- 6: head portion
- 8: side wall
- 14: horizontal rim
- 15: outer edge
- 18: sealing edge
- 19: bottom wall
- 21: outlet
- 22: side
- 28: rim
- 32: upper side
- 34: inlet

- 40: apparatus
- 42: inlet funnel
- 44: container portion
- 45: inlet opening
- 46: lower portion
- 48: seat
- 50: side
- 52: side
- 54: holding rim
- 56: locking hook
- 58: tapered protrusion
- 60: protrusion
- 61: groove
- 62: sealing ring
- 65: outlet opening
- 66: bottom end
- 68: leaf spring
- 70: locking hook
- 72: channel
- 74: reset spring
- 76: tapered protrusion
- 80: locking hook
- 81: tapered protrusion
- 82: locking rim
- 84: outer edge

- G: gravitational direction

## Claims

1. Apparatus (40) for the filtration of liquids
with an inlet funnel (42) having a seat (48) for a filter cartridge (2) comprising first sealing means, first spring means and first locking means, and with a filter cartridge (2) having second sealing means, second spring means and second locking means,
wherein the filter cartridge (2) is insertable into the seat (48) of the inlet funnel (42) in an operating position,
wherein the first spring means and the second spring means are arranged to come into contact with each other during the transition of the filter cartridge (2) into the operating position and at least one of the spring means is pretensionable,
wherein the first locking means and the second locking means are arranged to cooperate so that they removably fixate the filter cartridge (2) in the operating position and hold the at least one of the spring means in a pretension position, and
wherein the first sealing means and the second sealing means are arranged to be pressed against each other under tension in the operating position, thereby securing a flow of the liquid through the filter cartridge (2).

2. Apparatus (40) according to claim 1,
**characterized in that** the inlet funnel (42) is provided with an inlet opening (45) and **in that** the seat (48) is located beneath the inlet opening (45) along the gravitational direction (G) and is accessible from the inlet opening (45).

3. Apparatus (40) according to claim 2,
**characterized in that** the first locking means is accessible from the inlet opening (45).

4. Apparatus (40) according to one of claims 1 to 3,
**characterized in that** the first sealing means and the second sealing means in the operating position are pressed against each other under tension in the gravitational direction (G).

5. Apparatus (40) according to one of the preceding claims,
**characterized in that** the first locking means and the second locking means comprise at least one locking hook (56, 70) and at least one locking rim, wherein the locking hook (56, 70) is slideable along the locking rim during the transition of the filter cartridge (2) into the operating position and interlockable with the locking rim in a form-fit manner (fixation position).

6. Apparatus (40) according to claim 5,
**characterized in that** the locking hook (56, 70) is movable between a release position and the fixation position.

7. Apparatus (40) according to claim 6,
**characterized in that** the locking hook (70) comprises a reset spring (74) acting in the direction of the fixation position.

8. Apparatus (40) according to one of claims 6 or 7,
**characterized in that** the locking hook (56) is formed integrally with the inlet funnel and elastically deformable from the fixation position to the release position.

9. Apparatus (40) according to one of claims 6 to 8,
**characterized in that** the first locking means comprises several locking hooks (56, 70) located along a circumferential rim of the seat (48) at equal distances.

10. Apparatus (40) according to one of the preceding claims,
**characterized in that** the first sealing means and the second sealing means comprise at least two sealing elements, one of the sealing elements being more elastic than the other.

11. Apparatus (40) according to claim 10,
**characterized in that** the sealing elements are ring-shaped.

12. Apparatus (40) according to one of the preceding claims
**characterized in that** the first spring means and the second spring means comprise at least one spring element and at least one support element.

13. Apparatus (40) according to claim 12,
**characterized in that** the spring element is a coil spring, a leaf spring (68), a flat spring or a torsion spring.

14. Apparatus (40) according to claim 12 or 13,
**characterized in that** the spring element is formed integrally with the inlet funnel (42).

15. Method for inserting a filter cartridge (2) having second sealing means, second spring means and second locking means into an operating position in an inlet funnel (42) having a seat (48) for the filter cartridge (2) comprising first sealing means, first spring means and first locking means,
**characterized in that:**
- the filter cartridge (2) is placed in the seat (48) of the inlet funnel (42) in a standby position,
- during transition of the filter cartridge (2) from the standby position into the operating position the first spring means and the second spring means come into contact with each other and at least one of the first and the second spring means is pretensioned,
- the first locking means and the second locking means cooperate so that they removably fixate the filter cartridge (2) in the operating position and hold the at least one of the spring means in a pretension position, and
- the first sealing means and the second sealing means are pressed against each other under tension in the operating position, thereby securing a flow of the liquid through the filter cartridge (2).
